# EUROPEAN PATENT APPLICATION

(11) **EP 4 112 763 A1**
(43) Date of publication of application: **04.01.2023**
(21) Application number: 22180701.9
(22) Date of filing: 23.06.2022
(51) Int. Cl.: C22F 1/053, C22F 1/057, C22F 1/04, G01L 25/00, G01L 1/00

(54) **METHOD OF MANUFACTURING STRESS REFERENCE PIECE**

(30) Priority: 29.06.2021 JP 2021107924
(71) Applicant: Sintokogio, Ltd., Nagoya-shi, Aichi 450-6424 (JP)
(72) Inventor: Saito, Yuta, Nagoya-shi, Aichi, 450-6424 (JP); Aoki, Kan, Nagoya-shi, Aichi, 450-6424 (JP)
(74) Representative: Hoffmann Eitle

(57) **Abstract**

A method of manufacturing a stress reference piece made of an aluminum alloy includes the following steps (1) to (3):
(1) preparing an aluminum alloy member containing an element that generates a β phase;
(2) performing a shot peening treatment on the aluminum alloy member; and
(3) performing a tempering treatment on the aluminum alloy member after the shot peening treatment, the tempering treatment accelerating generation of the β phase.

## Description

### TECHNICAL FIELD

The present disclosure relates to a method of manufacturing a stress reference piece.

### BACKGROUND

In the X-ray residual stress measurement, it is recommended to measure a reference piece using strain-free iron powder in order to confirm an operation of the measurement device (The Society of Materials Science, Japan., "Standard for X-ray Stress Measurement (2002 edition) -Iron and Steel Edition-", p. 73). The strain-free iron powder is an object obtained by solidifying powder of sufficiently annealed iron close to pure iron with an adhesive or the like. By using such the reference piece and confirming that the vicinity of the 0 MPa (stress-free) is measured, it is possible to confirm that the measurement device operates normally.

### SUMMARY

When an X-ray residual stress measurement device is used in the industrial field, there is a potential need to construct the reference piece from material used for manufacture.

The present disclosure provides a method of manufacturing a stress reference piece that can manufacture a stress reference piece made of an aluminum alloy.

A method of manufacturing a stress reference piece according to one aspect of the present disclosure is a method of manufacturing a stress reference piece made of an aluminum alloy. The method includes the following steps (1) to (3):
(1) preparing an aluminum alloy member containing an element that generates a β phase;
(2) performing a shot peening treatment on the aluminum alloy member; and
(3) performing a tempering treatment on the aluminum alloy member after the shot peening treatment, the tempering treatment accelerating generation of the β phase.

In the method of manufacturing the stress reference piece, the crystal grains in the surface layer of the aluminum alloy member can be refined by the shot peening treatment. Therefore, a certain number or more of crystal grains can be present in the measurement range of the X-ray residual stress measurement, and the detected Debye ring can be a continuous ring. For the reliability of the X-ray residual stress measurement, it is desirable that the peak intensity is constant, that is, the Debye ring is continuous. Therefore, a reliable measurement result can be obtained in the X-ray residual stress measurement. Strain is introduced into the surface layer of the aluminum alloy member by the shot peening treatment, and as a result, residual stress (compressive residual stress) is imparted thereto. The residual stress generated by the shot peening treatment is relaxed when the β phase is formed on the strain. Since the aluminum alloy member contains an element that generates a β phase, the residual stress value changes with time. In this manufacturing method, since the formation of the β phase is accelerated while the refinement of the crystal grains is maintained by the tempering treatment, a temporal change of the residual stress after the tempering treatment can be suppressed. As described above, the stress reference piece made of an aluminum alloy in which a reliable measurement result can be obtained and the temporal change of the residual stress value is suppressed can be manufactured.

In one embodiment of the present disclosure, the tempering treatment may be a treatment of holding the aluminum alloy member at a temperature of 125 °C or more and 170 °C or less for 6 hours or more. In this case, while suppressing recrystallization of the aluminum alloy, it is possible to reliably make the aluminum alloy member stress-free and suppress a temporal change in the residual stress after the tempering treatment. In the present specification, the term "stress-free" means that the residual stresses approach the 0 MPa as much as possible.

In one embodiment of the present disclosure, a time for which the aluminum alloy member is held at a temperature of 125 °C or more and 170 °C or less by the tempering treatment may be 72 hours or less. In this case, recrystallization of the aluminum alloy can be more reliably suppressed.

In one embodiment of the present disclosure, the element may be Mg, Cu, or Mn. Since any of these elements forms a β phase, it is effective to perform a tempering treatment.

In one embodiment of the present disclosure, the shot peening treatment may be performed using a shot medium made of zirconia, glass, or steel at an injection pressure of 0.1 MPa or more and 0.5 MPa or less. In this case, the crystal grains in the surface layer of the aluminum alloy member can be reliably refined, and reliable measurement results can be obtained.

In one embodiment of the present disclosure, the tempering treatment may be performed such that a half-width of the diffraction X-ray peak of the aluminum alloy member changes by 0.1 deg or more. In this case, it is possible to reliably suppress a temporal change in the residual stress.

In one embodiment of the present disclosure, the tempering treatment may be performed such that a difference between residual stress of the aluminum alloy member at 24 hours from the tempering treatment and past 24 hours from the tempering treatment is 50 MPa or less. In this case, it is possible to reliably suppress a temporal change of the residual stress.

In one embodiment of the present disclosure, the aluminum alloy member may be a bulk body. In this case, a stress reference piece of the bulk body can be obtained.

A method of manufacturing a stress reference piece according to another aspect of the present disclosure is a method of manufacturing a stress reference piece made of an aluminum alloy. The method includes the following steps (1) to (3):
(1) preparing an aluminum alloy member containing an element that generates a β phase;
(2) performing a shot peening treatment on the aluminum alloy member; and
(3) holding the aluminum alloy member after the shot peening treatment at 125 °C or more and 170 °C or less for 6 hours or more.

In the method of manufacturing the stress reference piece, the crystal grains in the surface layer of the aluminum alloy member can be refined by the shot peening treatment. Therefore, a certain number or more of crystal grains can be present in the measurement range of the X-ray residual stress measurement, and the detected Debye ring can be a continuous ring. For the reliability of the X-ray residual stress measurement, it is desirable that the peak intensity is constant, that is, the Debye ring is continuous. Therefore, a reliable measurement result can be obtained in the X-ray residual stress measurement. Strain is introduced into the surface layer of the aluminum alloy member by the shot peening treatment, and as a result, residual stress (compressive residual stress) is imparted thereto. The residual stress generated by the shot peening treatment is relaxed when the β phase is formed on the strain. Since the aluminum alloy member contains an element that generates a β phase, the residual stress value changes with time. In this manufacturing method, since the aluminum alloy member is held at 125 °C or more and 170 °C or less for 6 hours or more, the formation of the β phase can be accelerated while suppressing recrystallization of the aluminum alloy. By accelerating the formation of the β phase, a temporal change in the residual stress after the tempering treatment can be suppressed. As described above, the stress reference piece made of an aluminum alloy in which a reliable measurement result can be obtained and the temporal change in the residual stress value is suppressed can be manufactured.

### BRIEF DESCRIPTION OF THE DRAWINGS

FIG. 1 is a flowchart showing a method of manufacturing a stress reference piece according to the present embodiment.
FIG. 2 is a graph showing a temporal change in residual stress of the stress reference piece according to the example.
FIG. 3 is a graph showing a temporal change in the half-width of the stress reference piece according to the example.
FIG. 4 is a graph showing a temporal change in residual stress of the stress reference piece according to the comparative example.
FIG. 5 is a graph showing a relationship between the holding time and the residual stress.
FIG. 6 is a graph showing a relationship between the holding time and the residual stress.
FIG. 7 is a graph showing a relationship between peak intensity and α angle.
FIG. 8 is a graph showing a relationship between peak intensity and α angle.

### DETAILED DESCRIPTION

Hereinafter, with reference to the accompanying drawings, an embodiment will be described in detail. In the description, the same reference signs are used for the same elements or elements having the same function, and duplicate description thereof will be omitted.

The stress reference piece manufactured by the manufacturing method according to the present embodiment is a bulk body made of an aluminum alloy containing an element that generates a β phase. The element that forms the β phase is, for example, Mg, Cu, or Mn. The stress reference piece contains at least one or more kinds of elements generating the β phase. In the aging step in an isothermal state, a plate-like stable phase precipitate (β phase) is precipitated through a supersaturated solid solution, an acicular zone, and a rod-like precipitate in this order. The total volume of the precipitated β phase is reduced from that of the supersaturated solid solution. When the generated energy due to the reduction of the total volume is E and the energy for the precipitation of the β phase, that is, the generation of a new phase is G, G > E is obtained. Originally, G = E + H is obtained by adding thermal energy H. By using the strain energy ΔG in the material as a substitute for H, the β phase is precipitated even in a normal temperature state.

When the content (total content) of Mg, Cu, and Mn is at least 0.2% or more, the β phase is generated. The stress reference piece is an extremely low stress (stress-free) aluminum alloy member having a residual stress infinitely close to 0. The residual stress value of the stress-reference piece is, for example, -25 MPa or more and 25 MPa or less, and preferably -10 MPa or more and 10 MPa or less. Minus indicates compressive residual stress and plus indicates tensile residual stress.

The stress reference piece is used to verify the condition of the stress measurement device. A predetermined compressive residual stress is imparted to the stress reference piece by combining a shot peening treatment and a heat treatment included in a conventional manufacturing process in the automobile and aircraft industries. In the stress reference piece, the following three points are needed.
(1) The detected Debye rings are continuous. That is, the crystal grains are sufficiently fine.
(2) A predetermined residual stress value set in advance is measured.
(3) The residual stress value does not change with time.

The above (1) is solved by refining the crystal by shot peening treatment. However, compressive residual stress is applied to the surface layer by performing the shot peening treatment with energy sufficient to enable the refinement. In addition, the relaxation of the residual stress causes a temporal change in the residual stress value. The above described elements added to the aluminum alloy are related to this temporal change. The above described elements form a β phase compound on the strain introduced by the shot peening treatment. At this time, the residual stress imparted by the shot peening treatment is relaxed.

The residual-stress value in the above (2) is in the vicinity of the 0 MPa (stress-free). Actually, since the 0 MPa is not calculated in the calculation when the measurement value is acquired, a certain degree of variation in the numerical value is allowed. The above (3) is solved by performing a heat treatment. However, the refined crystal grains are recrystallized and coarsened by the heat treatment. Therefore, in the analysis of the residual stress, the number of crystals from which data can be acquired decreases, and the Debye ring becomes discontinuous.

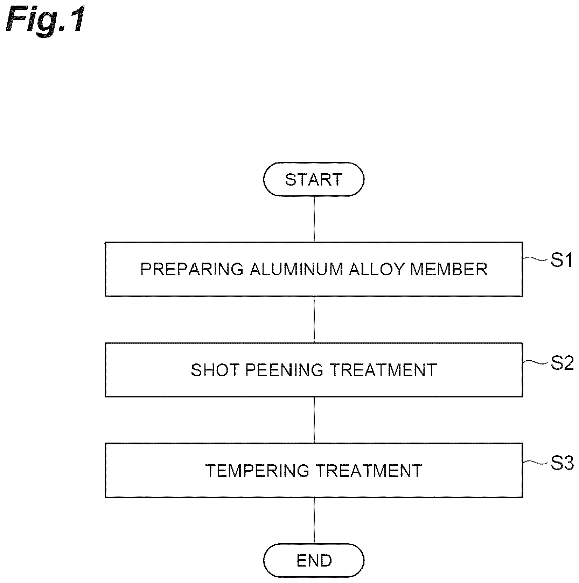

FIG. 1 is a flowchart showing a method of manufacturing a stress reference piece according to the present embodiment. As shown in FIG. 1, the manufacturing method of the stress-reference piece includes steps S1 to S3. Hereinafter, each step will be described.

The step S1 is a step of preparing an aluminum alloy member containing the element that generates the β phase. The aluminum alloy member is a starting material for manufacturing the stress reference piece. The aluminum alloy member is a bulk body subjected to a predetermined tempering treatment (heat treatment). The aluminum alloy member is made of, for example, a wrought aluminum alloy or a cast aluminum alloy.

The step S2 is a step of performing a shot peening treatment on the surface layer of the aluminum alloy member prepared in the step S1 using a shot peening apparatus. According to the step S2, the crystal grains in the surface layer of the aluminum alloy member can be refined. Therefore, a certain number or more of crystal grains can be present in the measurement range of the X-ray residual stress measurement, and the detected Debye ring can be a continuous ring. As a result, a reliable measurement result can be obtained in the X-ray residual stress measurement.

The shot peening treatment is performed by an air method using a shot medium made of zirconia, glass, or steel, for example. Therefore, the crystal grains in the surface layer of the aluminum alloy member can be reliably refined. The air pressure (projection pressure) is, for example, 0.1 MPa or more and 0.5 MPa or less. The particle diameter of the shot medium is, for example, 0.05 mm or more and 0.6 mm or less. The hardness of the shot medium is, for example, 250 HV or more and 700 HV or less. These shot peening conditions are set according to the type of the aluminum alloy member.

The shot peening treatment refines (nanocrystallizes) the crystal grains in the surface layer of the aluminum alloy member. This increases the number of crystals from which data can be acquired in the analysis of residual stress. Therefore, the Debye ring can be a continuous ring to improve the reliability of the measurement result. The grain size of the refined crystal grains is, for example, 5nm or more and 50nm or less, and more preferably 5nm or more and 20nm or less. The refined crystal grains are present, for example, in a depth range of 50 µm or less from the surface of the aluminum alloy member.

The step S3 is a step of performing tempering treatment on the aluminum alloy member after the shot peening treatment. The tempering treatment is a treatment in which the aluminum alloy member is held at a temperature of 125 °C or more and 170 °C or less for one hour or more, and then cooled to a normal temperature state. The formation of the β phase compound is accelerated by heating in a temperature range of 125 °C or more. Therefore, according to the process S3, it is possible to suppress the temporal change of the residual stress after the tempering treatment. The recrystallization temperature of the aluminum alloy having low purity is 180 °C or more. Therefore, recrystallization can be suppressed by heating in a temperature range of 170 °C or less.

The time (heat treatment time) for which the aluminum alloy member is held at a temperature of 125 °C or more and 170 °C or less by the tempering treatment is at least 1 hour or more, and preferably 6 hours or more. As a result, it is possible to reliably make the aluminum alloy member stress-free and suppress the temporal change in residual stress after tempering treatment while suppressing recrystallization of the aluminum alloy. The heat treatment time is 72 hours or less, preferably 48 hours or less, and more preferably 24 hours or less. By setting the heat treatment time to 72 hours or less, recrystallization of the aluminum alloy can be more reliably suppressed, and productivity can be improved.

The step S3 is performed using an apparatus capable of maintaining a constant temperature at a temperature higher than room temperature, such as a drying oven or a muffle oven. This makes it possible to obtain a more reliable measurement result in the X-ray residual stress measurement. The tempering treatment is performed such that the half-width of the diffraction X-ray peak of the aluminum alloy member changes by 0.1 deg or more, preferably 0.2 deg or more by the tempering treatment. The tempering treatment is performed such that a difference (absolute value) between residual stress of the aluminum alloy member at 24 hours from the tempering treatment and past 24 hours from the tempering treatment is 50 MPa or less. As a result, the temporal change of the residual stress is suppressed. The process S3 is performed, for example, without delay after the process S2. In this case, productivity is improved. The step S3 may be performed at an interval after the step S2.

According to the steps S1 to S3 described above, it is possible to obtain a reliable measurement result and manufacture the stress reference piece made of an aluminum alloy in which a temporal change in the residual-stress value is suppressed.

The present invention is not necessarily limited to the above-described embodiment, and various modifications can be made without departing from the scope of the present invention.

### EXAMPLE

Hereinafter, the present disclosure will be described in more detail with reference to examples, but the present disclosure is not limited to these examples.

The stress reference piece according to the example was manufactured as follows. First, test materials made of A7075 and A2014 were prepared as starting materials. A7075 and A2014 are wrought aluminum alloys specified by JIS. Next, these test materials were subjected to a shot peening treatment. As the shot media, zircon beads B-205 (particle diameter: 0.05 mm) manufactured by Saint-Gobain Co., Ltd. was used. The projection pressure was 0.3 MPa, a stage moving speed was 10 mm/s, and the arc height was 0.090 mmN. Subsequently, as the tempering treatment, the test materials after the shot peening treatment were held at 150 °C for 6 hours, and then cooled to room temperature. As a result, the stress reference pieces according to the example were obtained.

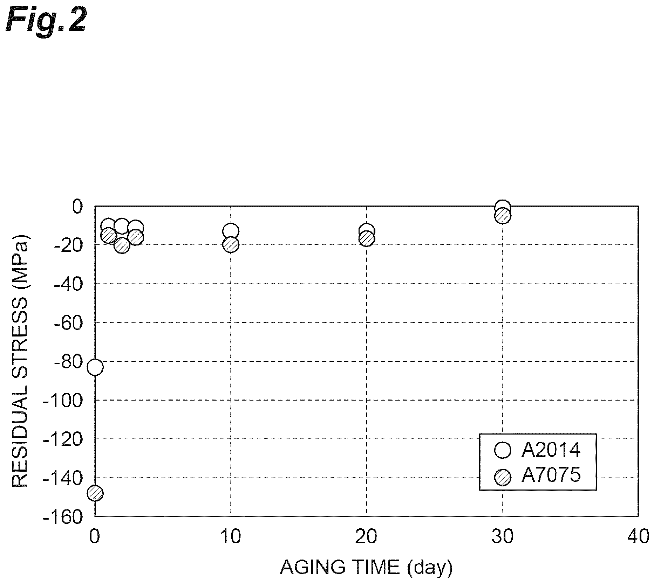

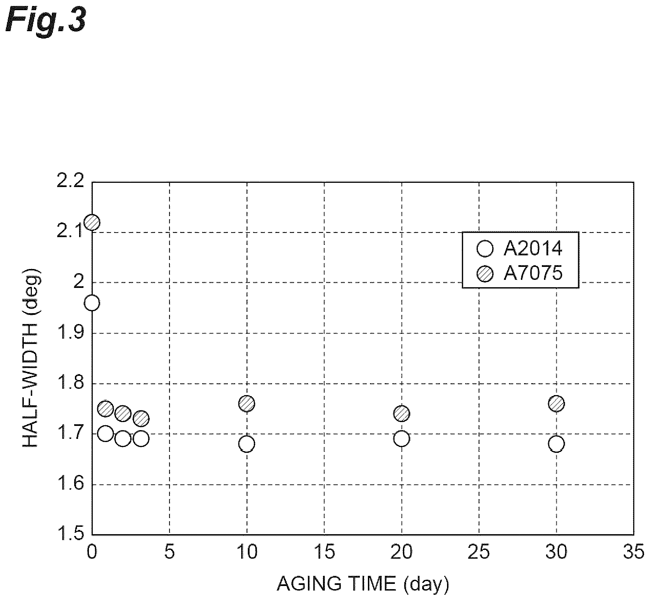

FIG. 2 is a graph showing a temporal change in residual stress of the stress reference piece according to the example. FIG. 3 is a graph showing a temporal change in the half-width of the stress reference piece according to the example. The horizontal axis in FIGS. 2 and 3 represents the aging time. The vertical axis of FIG. 2 represents the residual stress. The vertical axis in FIG. 3 represents the half-width. The residual stress and the half-width were measured by the cos α method using an X-ray residual stress measurement device µ-X360s manufactured by Pulstec Industrial Co., Ltd. A Cr bulb was used, the irradiation radius was ϕ 3.0 mm, the collimator radius was ϕ 1.0 mm, and the measurement angle was 25 deg.

The residual stress and the half-width were measured at aging times of 0.25 days, 1 day, 5 days, 10 days, 20 days, and 30 days, respectively, with the starting point of the tempering treatment as the starting point of the aging time. The data for the aging time of 0.25 days (that is, 6 hours) are measured immediately after the tempering treatment. The residual stress and the half-width at the aging time of 0 are measured values after the shot peening treatment and immediately before the tempering treatment.

As shown in FIG. 2, the residual stress of the A7075 was -147 MPa immediately after the shot peening treatment, but was -16 MPa immediately after the tempering treatment because the residual stress became stress-free by the tempering treatment. Thereafter, the change was small, and the residual stress was -5 MPa at the aging time of 30 days. A difference (absolute value) between residual stress at 24 hours from the tempering treatment and past 24 hours from the tempering treatment was 20 MPa or less. The residual stress of the A2014 showed -89 MPa immediately after the shot peening treatment, but -11 MPa immediately after the tempering treatment because the residual stress became stress-free by the tempering treatment. Thereafter, the change was small, and the residual stress was -1 MPa at an aging time of 30 days. A difference (absolute value) between residual stress at 24 hours from the tempering treatment and past 24 hours from the tempering treatment was 20 MPa or less.

As shown in FIG. 3, the half-width of A7075 was 2.12 deg immediately after the shot peening treatment, but decreased by 0.37 deg by the tempering treatment, and was 1.75 deg immediately after the tempering treatment. Thereafter, there was almost no change, and the half-width was 1.76 deg at the aging time of 30 days. The half-width of A2014 was 1.96 deg immediately after the shot peening treatment, but decreased by 0.26 deg by the tempering treatment, and was 1.70 deg immediately after the tempering treatment. Thereafter, there was almost no change, and the half-width was 1.68 deg at the aging time of 30 days.

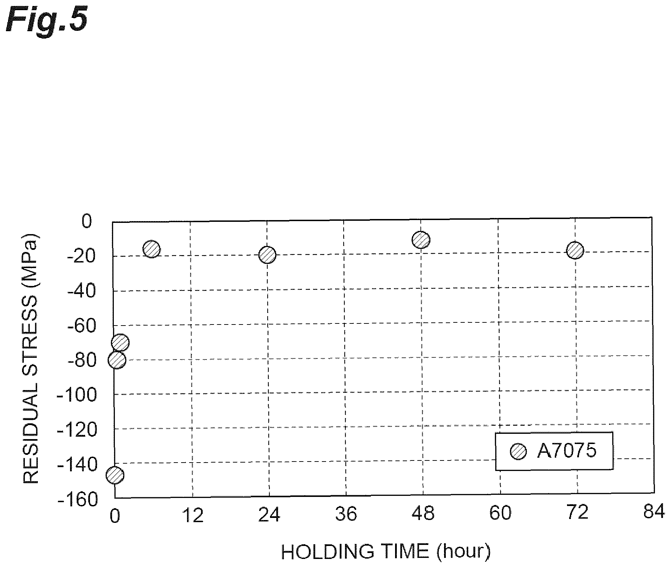

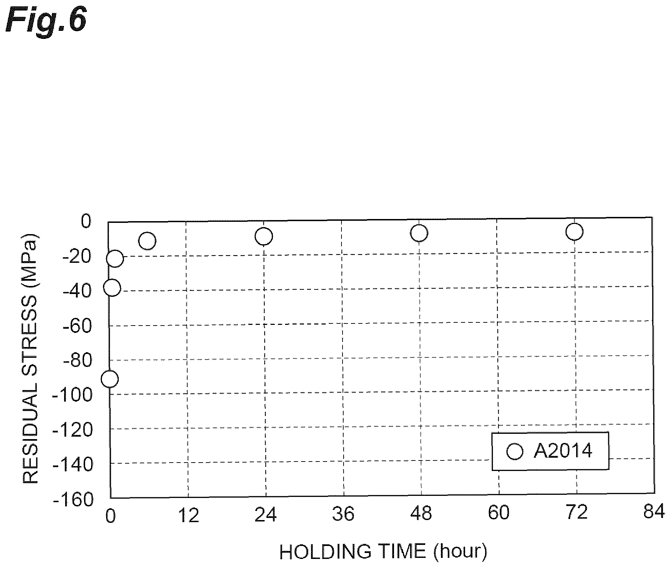

The residual stress and full width at half-width of the A7075 did not change from 30 days to 100 days of the aging time. In addition, as illustrated in FIG. 5, even in the case where the holding time of the tempering treatment was 24 hours, 48 hours, and 72 hours, the results were comparable to the results in the case of 6 hours. Similarly, the residual stress and the full width at half-width of the A2014 did not change from 30 days to 100 days of the aging time. Further, as illustrated in FIG. 6, even in the case where the holding time of the tempering treatment was 24 hours, 48 hours, and 72 hours, the results were comparable to the results in the case of 6 hours.

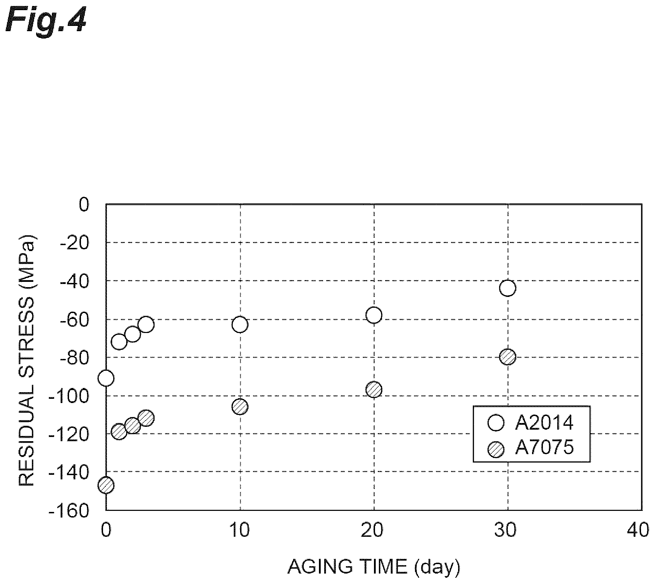

FIG. 4 is a graph showing a temporal change in residual stress of the stress reference piece according to the comparative example. The stress reference pieces according to the comparative examples were manufactured in the same manner as in the examples except that the tempering treatment was not performed, and the residual stress was measured in the same manner as in the example. As shown in FIG. 4, the residual stress in the A7075 was -146 MPa immediately after the shot peening treatment, but continued to change thereafter, and was -80 MPa at the aging time of 30 days. The residual stress in the A2014 was -88 MPa immediately after the shot peening treatment, but continued to change thereafter and was -44 MPa at the aging time of 30 days.

FIGS. 5 and 6 are graphs showing the relationship between the holding time and the residual stress. The horizontal axis in each of FIGS. 5 and 6 represents the holding time. The vertical axis in each of FIGS. 5 and 6 represents the residual stress. Here, the holding time of the tempering treatment after the shot peening treatment was set to 0, 30 minutes, 1 hour, 6 hours, 24 hours, 48 hours, and 72 hours, and the residual stress was measured immediately after the tempering treatment. The case where the holding time is 6 hours corresponds to the case of the above-described embodiment. The case where the holding time was 0 corresponds to the case of the above-described comparative example in which the tempering treatment was not performed, and the value of the residual stress measured immediately after the shot peening treatment was used.

FIG. 5 shows a case where the test material made of A7075 was used. As shown in FIG. 5, the residual stress was -80 MPa at the holding time of 30 minutes and -70 MPa at the holding time of 1 hour. These values were larger on the compression side than that at the holding time of 6 hours or more. When the holding time was 6 hours or more, there was no large difference in the residual stress. FIG. 6 shows a case where the test material made of A2014 was used. As shown in FIG. 6, the residual stress was -38 MPa at the holding time of 30 minutes and -21 MPa at the holding time of 1 hour. These values were larger on the compression side than that at the holding time of 6 hours or more. When the holding time was 6 hours or more, there was no large difference in the residual stress.

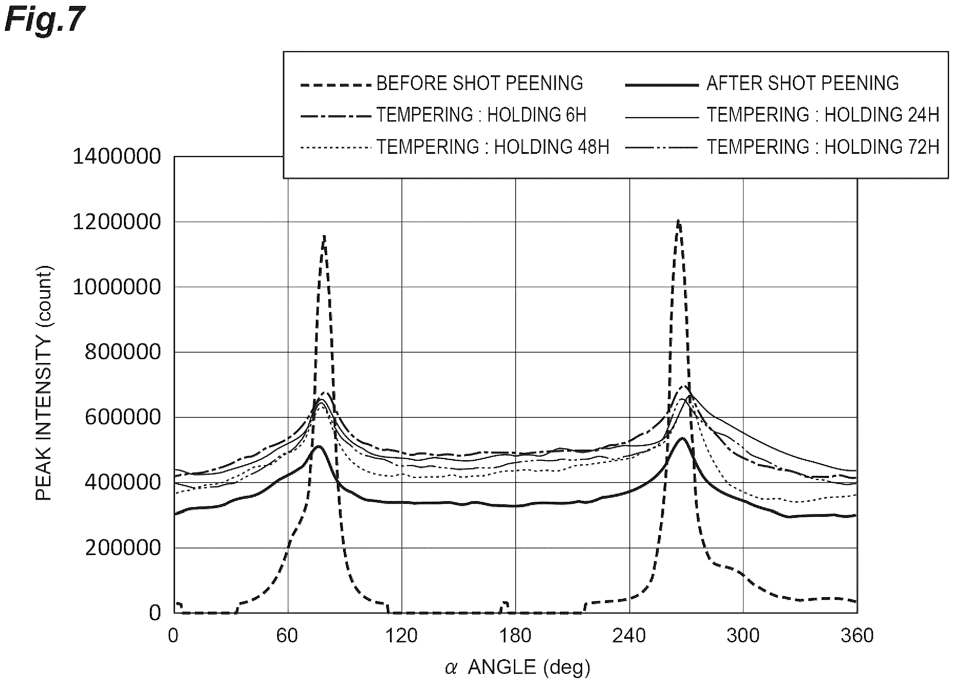

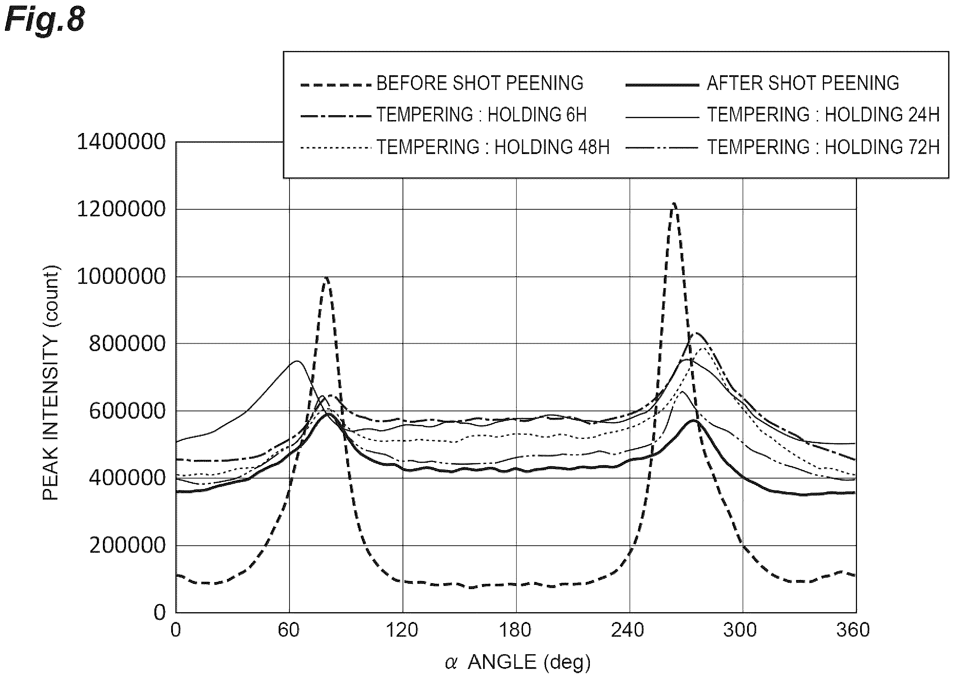

FIGS. 7 and 8 are graphs showing the relationship between the peak intensity and the α angle. The α angle is a rotation angle of the Debye ring, and is indicated from 0 deg to 360 deg. Here, the shot peening treatment was performed under the same conditions as in the above example, and X-ray diffraction images were obtained before and after the shot peening treatment. Further, X-ray diffraction images were obtained in the same manner for the cases where the tempering treatment was performed with the holding time of 6 hours, 24 hours, 48 hours, and 72 hours. For the Debye ring near 139 deg of the diffraction angle (20) in each of the obtained X-ray diffraction images, the peak intensity was plotted against the α angle.

FIG. 7 shows a case where the test material made of A7075 was used. FIG. 8 shows a case where the test material made of A2014 was used. As shown in FIGS. 7 and 8, in the case of using any of the test materials, projected peaks are observed at two points (two α angles) on the Debye ring before the shot peening treatment. When the shot peening treatment is performed, the phenomenon is suppressed, and the peak intensity is constant, that is, the Debye ring becomes continuous. As a result, it was confirmed that the shot peening improves the reliability of the X-ray stress measurement.

Even when the tempering treatment was performed, the Debye rings were continuous. There was no significant difference depending on the holding time in the peak intensity of the Debye ring after tempering treatment. In particular, when the test material made of A7075 was used, the peak intensity of the Debye ring after the tempering treatment was substantially the same regardless of the holding time. Therefore, in consideration of the productivity, the holding time of 6 hours is considered to be optimal.

## Claims

1. A method of manufacturing a stress reference piece made of an aluminum alloy, the method comprising:
preparing an aluminum alloy member containing an element that generates a β phase;
performing a shot peening treatment on the aluminum alloy member; and
performing a tempering treatment on the aluminum alloy member after the shot peening treatment, the tempering treatment accelerating generation of the β phase.

2. The method according to claim 1, wherein the tempering treatment is a treatment of holding the aluminum alloy member at a temperature of 125°C or more and 170°C or less for 6 hours or more.

3. The method according to claim 2, wherein a time for which the aluminum alloy member is held at a temperature of 125°C or more and 170°C or less by the tempering treatment is 72 hours or less.

4. The method according to any one of claims 1 to 3, wherein the element is Mg, Cu, or Mn.

5. The method according to any one of claims 1 to 4, wherein the shot peening treatment is performed using a shot medium made of zirconia, glass, or steel at an injection pressure of 0.1 MPa or more and 0.5 MPa or less.

6. The method according to any one of claims 1 to 5, wherein the tempering treatment is performed such that a half-width of a diffraction X-ray peak of the aluminum alloy member changes by 0.1 deg or more.

7. The method according to any one of claims 1 to 6, wherein the tempering treatment is performed such that a difference between residual stress of the aluminum alloy member at 24 hours from the tempering treatment and past 24 hours from the tempering treatment is 50 MPa or less.

8. The method according to any one of claims 1 to 7, wherein the aluminum alloy member is a bulk body.

9. The method according to any one of claims 1 to 8, wherein a content of the element in the aluminum alloy member is 0.2 % or more.

10. The method according to any one of claims 1 to 9, wherein a residual stress value of the stress reference piece is -25 MPa or more and 25 MPa or less.

11. The method according to any one of claims 1 to 9, wherein a residual stress value of the stress reference piece is -10 MPa or more and 10 MPa or less.

12. The method according to any one of claims 1 to 11, wherein the aluminum alloy member is made of a wrought aluminum alloy or a cast aluminum alloy.

13. The method according to any one of claims 1 to 12, wherein the shot peening treatment refines crystal grains in a depth range of 50 µm or less from surface of the aluminum alloy member to a grain size of 5nm or more and 50nm or less.

14. The method according to claim 2, wherein a time for which the aluminum alloy member is held at a temperature of 125 °C or more and 170 °C or less by the tempering treatment is 24 hours or less.
